(19) Europäisches Patentamt
European Patent Office
Office européen des brevets

(11) **EP 2 405 665 A2**

(12) **EUROPEAN PATENT APPLICATION**

(43) Date of publication:
**11.01.2012 Bulletin 2012/02**

(51) Int Cl.:
**H04N 13/00** *(2006.01)*

(21) Application number: **11161481.4**

(22) Date of filing: **07.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.07.2010 KR 20100064932**

(71) Applicant: **SAMSUNG ELECTRONICS CO., LTD.**
**Suwon-si**
**Gyeonggi-do 442-742 (KR)**

(72) Inventors:
• **Lee, Sang-hoon**
**Gyeonggi-do (KR)**
• **Yang, Sun-ho**
**Seoul (KR)**

(74) Representative: **Brandon, Paul Laurence**
**APPLEYARD LEES**
**15 Clare Road**
**Halifax HX1 2HY (GB)**

(54) **Method and apparatus for displaying a 3D caption**

(57) A display apparatus and a displaying method generate caption information using depth information of an estimated main object area of a three-dimensional (3D) image, and combine a caption with the 3D image according to the generated caption information and display the caption-combined 3D image.

# FIG. 1

**Description**

**CROSS-REFERENCE TO RELATED APPLICATION**

This application claims priority from Korean Patent Application No. 10-2010-0064932, filed on July 6, 2010, in the Korean Intellectual Property Office, the disclosure of which is incorporated herein by reference in its entirety.

**BACKGROUND**

1. Field

Exemplary embodiments relate to displaying method and apparatus, and more particularly, to a method and apparatus for displaying a caption.

2. Description of the Related Art

A three-dimensional (3D) display such as a 3D projector for a theater or a 3D flat panel display, which adopts a stereoscopy scheme, displays a caption at a predetermined depth separately from a sense of depth of an image. Therefore, the caption looks as if it is embossed at a constant height or engraved at a constant depth regardless of a change in depth of a main object on a screen viewed by a viewer. To this end, the viewer suffers from great vergence while seeing the image and the caption alternately. The great vergence causes a conflict between vergence and accommodation, which increases visual fatigue of the viewer.

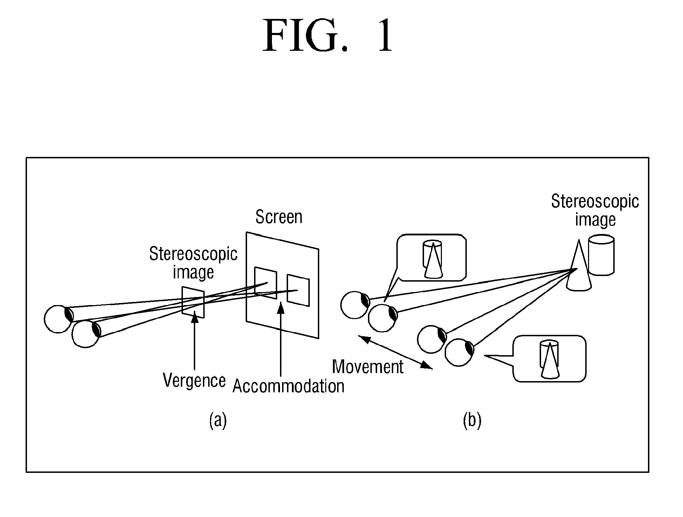

Since the stereoscopy scheme displays different images on the left-eye and the right-eye three-dimensionally when displaying the caption, the vergence allows correct perception of a position of an inner diameter of a stereoscopic image, whereas the eyes focus on a screen of the display. Therefore, the accommodation does not operate well as shown in (a) of FIG. 1.

The vergence-accommodation refers to a human ocular function of trying to match accommodation with an inner diameter position perceived by vergence. However, in a related-art method for displaying a caption three-dimensionally, there is a conflict between accommodation and vergence and the accommodation cannot follow the vergence-accommodation. Such a conflict between the accommodation and the vergence cannot exist in a real world and thus causes fatigue on human eyes.

Also, if a position of an object viewed by the viewer is changed when the viewer is viewing an image and a caption alternately, an image of the object actually perceived by the viewer is different and thus a lack of motion parallax is caused. Therefore, the visual fatigue increases.

**SUMMARY**

Exemplary embodiments overcome the above disadvantages and other disadvantages not described above. However, it is understood that an exemplary embodiment is not required to overcome the disadvantages described above, and an exemplary embodiment may not overcome any of the problems described above.

One or more exemplary embodiment provide a display apparatus which generates a caption and a displaying method thereof.

In accordance with an aspect of an exemplary embodiment, a displaying method includes: generating caption information using depth information of an estimated main object area of a 3D image, and combining a caption with the 3D image according to the generated caption information and displaying the caption-combined 3D image.

The caption information may include at least one of depth, position, size, and color of the caption, and the at least one of the depth, position, size, and color of the caption may have a different value for every frame of the 3D image.

The color of the caption may be changed as color of the estimated main object area is changed.

The displaying method may further include: estimating a main object area where a main object is located from the 3D image and extracting the estimated main object area, and calculating the depth information of the estimated main object area.

The depth information of the estimated main object area may be determined by extracting a left-eye image area and a right-eye image area of the 3D image corresponding to the estimated main object area, and calculating a difference in depth information between the left-eye image area and the right-eye image area.

The depth information of the estimated main object area may be determined by analyzing brightness of the 3D image.

The displaying method may further include calculating average depth information of the 3D image, and the generating the caption information may include generating the caption information using the depth information of the estimated main object area and the calculated average depth information.

The average depth information may be calculated using an average difference in a position between a left-eye image and a right-eye image of the 3D image.

The displaying method may further include converting a 2D image into the 3D image.

The displaying method may further include extracting the caption from a caption file of the 3D image.

The displaying method may further include extracting the caption from the 3D image.

In accordance with an aspect of another exemplary embodiment, a display apparatus includes: a caption information generator that generates caption information using depth information of an estimated main object area of a 3D image, a caption combiner that combines a caption with the 3D image according to the generated caption information; and an image output unit that displays the caption-combined 3D image.

The caption information may include at least one of depth, position, size, and color of the caption, and the at least one of the depth, position, size, and color of the caption may have a different value for every frame of the 3D image.

The color of the caption may be changed according to color of the estimated main object area.

The display apparatus may further include: a main object extractor that estimates a main object area where a main object is located from the 3D image, and extracts the estimated main object area, and a main object depth information calculator that calculates depth information of the extracted main object area.

The main object depth information calculator may determine the depth information of the estimated main object area by extracting a left-eye image area and a right-eye image area of the 3D image corresponding to the estimated main object area, and calculating a difference in depth information between the extracted areas.

The main object depth information calculator may determine the depth information of the estimated main object area by analyzing brightness of the 3D image.

The display apparatus may further include an average depth information calculator that calculates average depth information of the 3D image, and the caption information generator may generate the caption information using the depth information of the estimated main object area and the calculated average depth information.

The average depth information calculator may calculate the average depth information using an average difference in a position between a left-eye image and a right-eye image of the 3D image.

The display apparatus may further include a 3D image converter that converts a two-dimensional (2D) image into the 3D image.

The display apparatus may further include a caption text extractor that extracts the caption from a caption file of the 3D image.

The display apparatus may further include a caption image extractor that extracts the caption from the 3D image.

Additional aspects of the present inventive concept will be set forth in the detailed description, will be obvious from the detailed description, or may be learned by practicing the invention.

## BRIEF DESCRIPTION OF THE DRAWINGS

The above and/or other aspects will be more apparent by describing in detail exemplary embodiments taken in conjunction with the accompanying drawings in which:

FIG. 1 is a view to explain a problem of a related-art 3D caption displaying method;

FIG. 2 is view illustrating a 3D image providing system in accordance with an exemplary embodiment;

FIG. 3 is a block diagram illustrating a display apparatus in accordance with an exemplary embodiment;

FIG. 4 is a block diagram illustrating a display apparatus in accordance with an exemplary embodiment;

FIG. 5 is a block diagram illustrating an example of a process of generating caption information in accordance with an exemplary embodiment; and

FIG. 6 is a flowchart illustrating a displaying method in accordance with an exemplary embodiment.

## DETAILED DESCRIPTION OF EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the invention with unnecessary detail.

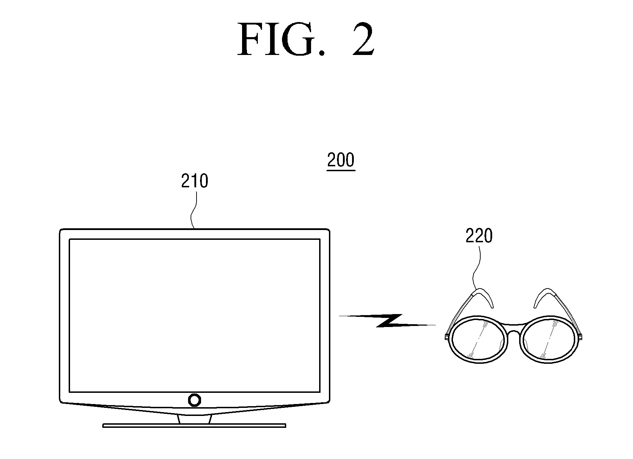

FIG. 2 is a view illustrating a 3D image providing system 200 according to an exemplary embodiment. As shown in FIG. 2, the 3D image providing system 200 includes a display apparatus 210 for displaying a 3D image on a screen and a pair of 3D glasses 220 for viewing the 3D image.

The display apparatus 210 may display a 3D image or may display both a 2D image and a 3D image.

In order to display a 2D image, the display apparatus 210 may use the same method as in an existing 2D display apparatus, and, in order to display a 3D image, the display apparatus 210 receives a 3D image from a photographing apparatus such as a camera or a 3D image which is edited/processed by a broadcasting station after being captured by a camera and is transmitted from the broadcasting station, and processes the 3D image. In particular, the display apparatus 210 processes a left-eye image and a right-eye image with reference to a format of the 3D image, and time-divides the left-eye image and the right-eye image such that the left-eye image and the right-eye image are displayed alternately.

The pair of 3D glasses 220 may be a pair of passive type polarization glasses to allow a left-eye and a right-eye to have different polarizations, or may be a pair of active type shutter glasses.

The 3D image providing system according to an exemplary embodiment may further include a camera (not shown) for generating a 3D image.

The camera (not shown) is a photographing apparatus for generating a 3D image and generates a left-eye image to be provided to a left-eye of a viewer and a right-eye image to be provided to a right-eye of the viewer. In other words, the 3D image includes the left-eye image and the right-eye image and the right-eye image and the left-eye image are provided to the left-eye and the right eye of the viewer alternately such that stereoscopic perception is generated due to binocular disparity.

To achieve this, the camera (not shown) includes a left-eye camera for generating the left-eye image and a right-eye camera for generating the right-eye image, and a gap between the left-eye camera and the right-eye camera is determined in consideration of a distance between the both eyes of a person.

The camera (not shown) transmits the photographed left-eye image and right-eye image to the display apparatus 210. In particular, the camera (not shown) may transmit the left-eye image and the right-eye image in a format in which one frame includes only one of the left-eye image and the right-eye image or in a format in which one frame includes both the left-eye image and the right-eye image.

The camera (not shown) determines one of various formats of the 3D image in advance, generates the 3D image according to the determined format, and transmits the 3D image to the display apparatus 210.

Although the pair of 3D glasses 220 is an element in this exemplary embodiment, the present disclosure can be applied to a display apparatus that allows a user to view a 3D image without a pair of 3D glasses 220.

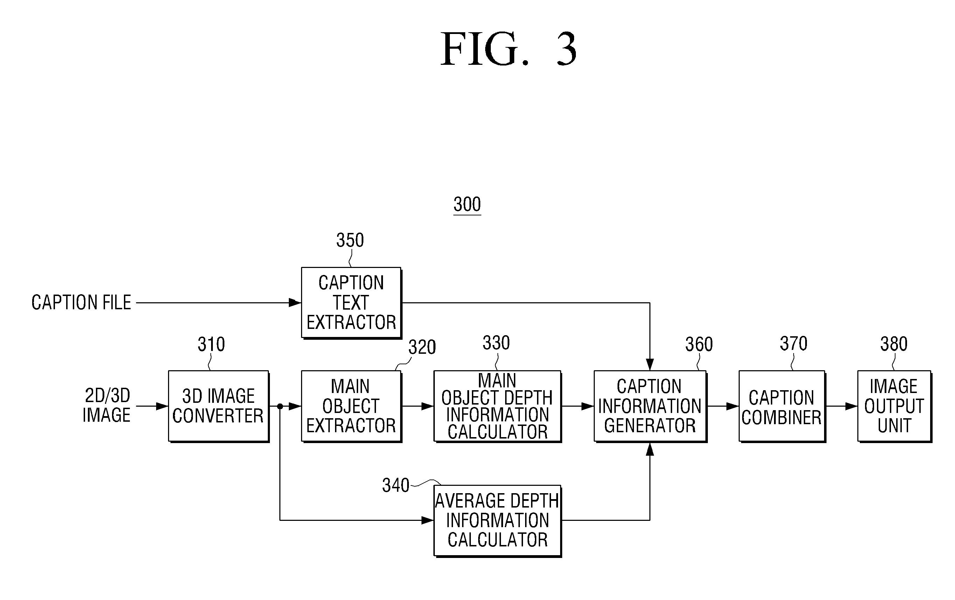

FIG. 3 is a block diagram illustrating a display apparatus 300 according to an exemplary embodiment. The display apparatus 300 shown in FIG. 3 includes a 3D image converter 310, a main object extractor 320, a main object depth information calculator 330, an average depth information calculator 340, a caption text extractor 350, a caption information generator 360, a caption combiner 370, and an image output unit 380. The display apparatus 300 may have a caption file separately from a 3D image.

The 3D image converter 310 converts a 2D image into the 3D image, and processes a left-eye image and a right-eye image with reference to a format of the 3D image and time-divides the left-eye image and the right-eye image such that the left-eye image and the right-eye image are displayed alternately.

Therefore, in accordance with an exemplary embodiment, even if a 2D image is input, the display apparatus 300 is able to convert the 2D image into the 3D image and the caption information generator 360, which will be described later, generates a caption according to caption information suitable for the 3D image.

The main object extractor 320 estimates a main object area where a main object is located from the 3D image and extracts the estimated main object area. The main object recited herein refers to an area a viewer mainly focuses on and, for example, corresponds to the biggest one of an entire group objects on a screen or an object providing the greatest depth perception. It is possible to extract an area including the main object area using a predetermined algorithm for extracting an estimated main object area.

For example, the estimated main object area may be detected by detecting motions of objects within an image, separating an independent object by predicting a subsequent motion of each object based on a moving direction of the object, and detecting the main object from the separated objects.

In accordance this exemplary embodiment, the main object extractor 320 of the display apparatus 300 extracts the estimated main object area from the 3D image. However, this should not be considered as limiting. Information regarding the estimated main object area may be included in the 3D image in advance or may be provided by an external apparatus. In this case, the main object extractor 320 may not perform the above-described function.

The main object depth information calculator 330 calculates depth information of the estimated main object area which is extracted by the main object extractor 320. Specifically, the depth information of the estimated main object area is determined by extracting a left-eye image area and a right-eye image area of the 3D image corresponding to the estimated main object area and calculating a difference in depth information between the left-eye image area and the right-eye image area, and is expressed by following formula 1:

[Formula 1]

$$Dm = \text{calculate\_depth\_of\_main\_object( )};$$

wherein Dm is depth information of an estimated main object area and is calculated using a function "calculate_depth_of_main_object ( )" for calculating a difference in a position on an x-axis between a left-eye image and a right-eye image of the estimated main object area.

The above formula and the formulas presented below do not refer to an actual calculation formula and refer to an algorithm language for calculating the depth information (Dm) of the estimated main object area, average depth information (Da), depth of a caption (D), and position, size, and color of a caption. Also, the formulas presented above and below are merely examples for generating caption information and the caption information may be generated using a different algorithm language or a different formula.

The main object depth information calculator 330 may determine the depth information of the estimated main object area by analyzing brightness of the 3D image.

In accordance with an exemplary embodiment, the main object depth information calculator 330 calculates the depth information of the estimated main object area. However, this should not be considered as limiting. The depth information of the estimated main object area may be included in the 3D image in advance or may be provided by an external apparatus. In this case, the main object depth information calculator 330 may not perform the above-described function.

The average depth information calculator 340 calculates average depth information of the 3D image. Specifically, the average depth information of the 3D image is calculated using an average difference in a position between the left-eye image and the right-eye image of the 3D image, and is expressed by following formula 2:

[Formula 2]

$$Da = \text{calculate\_average\_depth\_of\_scene ( )};$$

wherein Da is average depth information of a 3D image and is calculated using a function "calculate_average_depth_of_scene ( )" for calculating a difference in a position on an x-axis between a left-eye image and a right-eye image of the 3D image.

In accordance with an exemplary embodiment, the average depth information calculator 340 calculates the average depth information of the 3D image by way of example. However, this should not be considered as limiting, and the average depth information of the 3D image may be included in the 3D image in advance or may be provided by an external apparatus. In this case, the average depth information calculator 340 may not perform the above-described function.

The caption text extractor 350 extracts caption text from a caption file of the 3D image if the caption file exists separately from the 3D image.

The caption information generator 360 generates caption information using the depth information of the estimated main object area of the 3D image, which is calculated by the main object depth information calculator 330, and classifies the caption text extracted by the caption text extractor 350 to generate a left-eye image caption and a right-eye image caption according to the caption information.

The caption information may include at least one of depth, position, size, and color of the caption to be combined with the 3D image and displayed.

The at least one of the depth, position, size, and color of the caption may have a different value for every frame of the 3D image. This is because the depth, position, size, and color of the caption are determined according to the location and depth information of the estimated main object area and the average depth information of the image.

Also, the color of the caption may be changeable according to the color of the estimated main object area. In other words, the color of the caption may be changed as the color of the estimated main object area is changed. The color of the caption may be changed to the same as the color of the estimated main object area or may be changed to a different color from that of the estimated main object area so that the caption is distinguished from the image.

The caption may be located on an upper portion, a lower portion, a lateral surface, or an outside or an inside of the image. Also, the caption may not be fixed at a predetermined position and may be movable around the estimated main object area as the estimated main object area moves.

The caption information is not limited to the above-described information and may include a variety of information, for example but not limited to a shading effect, presence/absence of a specific effect, or a font of the caption. Also, the caption information may be generated by the caption information generator 360 or may be provided by an external apparatus as input information or may be included in the 3D image. In this case, the caption information generator 360 may not perform the above-described function.

In accordance with an exemplary embodiment, the caption information generator 360 may generate the caption information using the average depth information calculated by the average depth information calculator 340 in addition to the depth information of the estimated main object area. The caption information is expressed by following formula 3:

[Formula 3]

$$D = w*Da + (1-w)*Dm$$

wherein D is depth of a caption and w is a weight between 0 and 1.

In other words, the depth D of the caption is calculated using the depth information Dm of the estimated main object area and the average depth information Da of the image.

Also, the caption information generator 360 may generate the caption information for distinguishing the left-eye image and the right-eye image of the caption in a position on the x-axis, which may be expressed by following formula 4:

[Formula 4]

$$Pos\_Left = x + 0.5*D;$$

$$Pos\_Right = x + 0.5*D;$$

wherein Pos_Left is a position of a left-eye image of a caption on an x-axis and Pos_Right is a position of a right-eye image of the caption on the x-axis, and x is an arbitrary position where the caption is initially placed, for example but not limited to, an initial position of the caption which is calculated using a boundary line of the estimated main object area extracted from the 3D image by the main object extractor 320.

The caption combiner 370 combines the caption with the 3D image according to the caption information generated by the caption information generator 360. In other words, the caption combiner 370 adjusts the depth, position, size, or color of the caption according to the caption information generated by the caption information generator 360, and combines the caption corresponding to the left-eye image with the left-eye image and the caption corresponding to the right-eye image with the right-eye image.

Also, the caption combiner 370 may combine the caption with the left-eye image and the right-eye image distinguishably according to the caption information such as the position, size, and color of the caption, which is expressed by following formula:

[Formula 5]

$$Display\_caption(Caption, Pos\_Left, Pos\_Right, y, S, C);$$

wherein Caption is a command to combine a caption with a 3D image according to the position of the left-eye image of the caption on the x-axis (Pos_Left), the position of the right-eye image of the caption on the x-axis (Pos_Right), the position of the caption on the y-axis (y), the size (S) of the caption, and the color (C) of the caption.

The caption combiner 370 of the display apparatus 300 in accordance with an exemplary embodiment may adjust the depth, position, size, and color of the caption according to the caption information, for example but not limited to the depth, position, size, and color of the caption, which is calculated based on the depth information of the estimated main object area and the average depth information of the 3D image, and may combine the adjusted caption with the 3D image.

The image output unit 380 displays the 3D image with which the caption is combined by the caption combiner 370. In other words, the image output unit 380 alternately outputs the left-eye image and the right-eye image of the caption-combined 3D image output from the caption combiner 370 and provides them to the viewer.

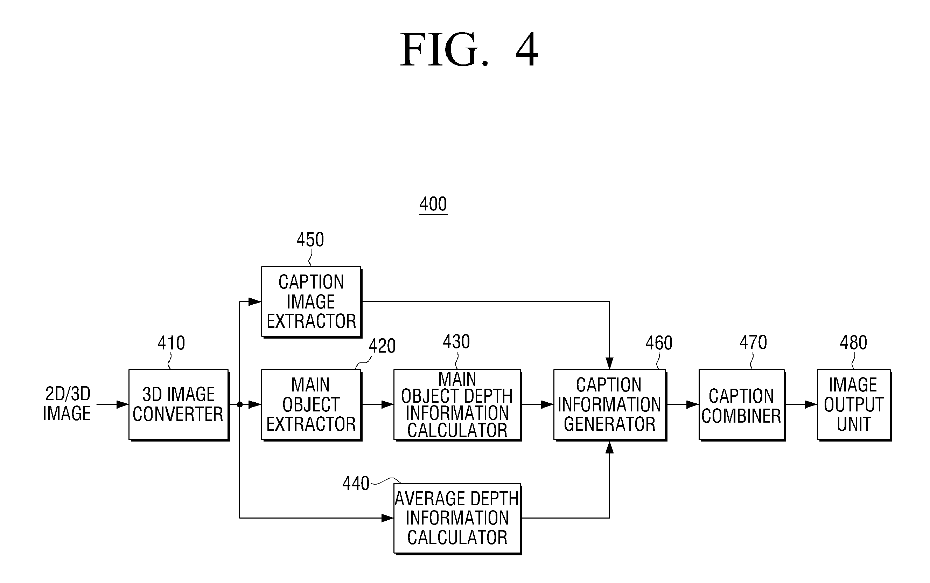

FIG. 4 is a block diagram illustrating a display apparatus 400 in accordance with another exemplary embodiment. As shown in FIG. 4, the display apparatus 400 includes a 3D image converter 410, a main object extractor 420, a main object depth information calculator 430, an average depth information calculator 440, a caption image extractor 450, a caption information generator 460, a caption combiner 470, and an image output unit 480. In accordance with this exemplary embodiment, a 3D image displayed by the display apparatus 400 shown in FIG. 4 includes a caption.

The elements except for the caption image extractor 450 are the same as described with reference to FIG. 3 and thus they will be described only briefly.

The 3D image converter 410 converts a 2D image into the 3D image, and processes a left-eye image and a right-eye image with reference to a format of the 3D image and time-divides the left-eye image and the right-eye image such that the left-eye image and the right-eye image are displayed alternately.

Therefore, in accordance with this exemplary embodiment, even if a 2D image is input, the display apparatus 400 is able to convert the 2D image into a 3D image and the caption information generator 460, which will be described later, generates a caption according to caption information suitable for the 3D image.

The main object extractor 420 estimates a main object area where a main object is located from the 3D image and extracts the estimated main object area.

In accordance with this exemplary embodiment, the main object extractor 420 of the display apparatus 400 extracts the estimated main object area from the 3D image. However, this should not be considered as limiting. Information regarding the estimated main object area may be included in the 3D image in advance or may be provided by an external apparatus. In this case, the main object extractor 420 may not perform the above-described function.

The main object depth information calculator 430 calculates depth information of the estimated main object area which is extracted by the main object extractor 420. Specifically, a left-eye image area and a right-eye image area of the 3D image corresponding to the estimated main object area are extracted.

The main object depth information calculator 430 may determine the depth information of the estimated main object area by analyzing brightness of the 3D image.

In accordance with this exemplary embodiment, the main object depth information calculator 430 calculates the depth information of the estimated main object area. However, this should not be considered as limiting. The depth information of the estimated main object area may be included in the 3D image in advance or may be provided by an external apparatus. In this case, the main object depth information calculator 430 may not perform the above-described function.

The average depth information calculator 440 calculates average depth information of the 3D image. The average depth information of the 3D image is calculated using an average difference in a position between the left-eye image and the right-eye image of the 3D image.

In accordance with this exemplary embodiment, the average depth information calculator 440 calculates the average depth information of the 3D image by way of example. However, this should not be considered as limiting, and the average depth information of the 3D image may be included in the 3D image in advance or may be provided by an external apparatus. In this case, the average depth information calculator 440 may not perform the above-described function.

The caption image extractor 450 extracts a caption image from the 3D image, if the 3D image includes a caption.

The caption information generator 460 generates caption information using the depth information of the estimated main object area of the 3D image, which is calculated by the main object depth information calculator 430, and classifies the caption image extracted by the caption image extractor 450 to generate a left-eye image caption and a right-eye image caption according to the caption information.

The caption information recited herein may include at least one of depth, position, size, and color of the caption to be combined with the 3D image and displayed.

Also, the color of the caption is changeable according to the color of the estimated main object area. In other words, the color of the caption may be changed as the color of the estimated main object area is changed. The color of the caption may be changed to the same as the color of the estimated main object area or may be changed to a different color from that of the estimated main object area so that the caption is distinguished from the image.

The caption information is not limited to the above-described information and may include a variety of information, for example but not limited to, a shading effect, presence/absence of a specific effect, or a font of the caption. Also, the caption information may be generated by the caption information generator 460 as in this exemplary embodiment, or may be provided by an external apparatus as input information or may be included in the 3D image. In this case, the caption information generator 460 may not perform the above-described function.

The at least one of the depth, position, size, and color of the caption may have a different value for every frame of the 3D image. This is because the depth, position, size, and color of the caption are determined according to the location and depth information of the estimated main object area and the average depth information of the image.

In accordance with an exemplary embodiment, the caption information generator 460 may generate the caption information using the average depth information calculated by the average depth information calculator 440 in addition to the depth information of the estimated main object area.

The caption combiner 470 combines the caption with the 3D image according to the caption information generated by the caption information generator 460. In other words, the caption combiner 470 adjusts the depth, position, size, or color of the caption according to the caption information generated by the caption information generator 460, and combines the caption corresponding to the left-eye image with the left-eye image and the caption corresponding to the right-eye image with the right-eye image.

Also, the caption combiner 470 may combine the caption with the left-eye image and the right-eye image distinguishably according to the caption information such as the position, size, and color of the caption.

The caption combiner 470 of the display apparatus 400 in accordance with another exemplary embodiment may adjust the depth, position, size, and color of the caption according to the caption information, for example but not limited to, the depth, position, size, and color of the caption, which is calculated based on the depth information of the estimated main object area and the average depth information of the 3D image, and may combine the adjusted caption with the 3D image.

The image output unit 480 displays the 3D image with which the caption is combined by the caption combiner 470. In other words, the image output unit 480 outputs the left-eye image and the right-eye image of the caption-combined 3D image output from the caption combiner 470 alternately and provides them to the viewer.

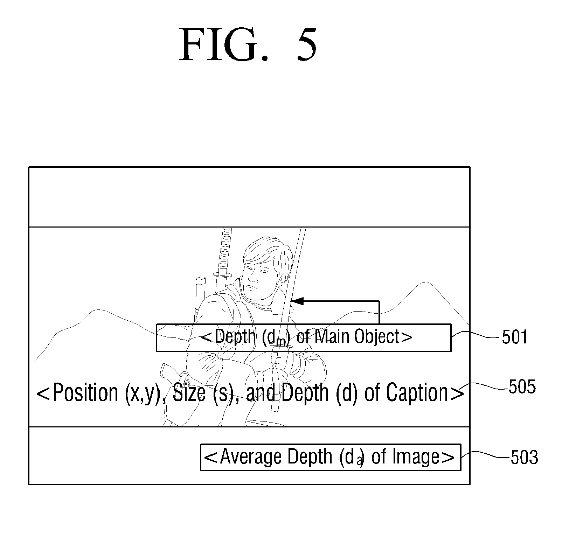

FIG. 5 is a view illustrating an example of a process of generating caption information in accordance with an exemplary embodiment.

As shown in FIG. 5, a display apparatus in accordance with diverse exemplary embodiments extracts an estimated main object area from a 3D image and determines position (x,y), size (s), and depth (d) of a caption 505 using depth information (dm) of the estimated main object area 501 and average depth information (da) of the image 503. In other words, in the 3D image shown in FIG. 5, the person having a sword is the estimated main object area a viewer mainly focuses on.

In displaying 3D contents with a caption, the display apparatus changes the depth of the caption dynamically according to the depth information of the estimated main object area, which also changes dynamically, thereby minimizing a conflict between accommodation and vergence and mitigating visual fatigue of the viewer. Also, by changing the caption information, for example but not limited to, the depth, size, position, and color of the caption as 3D input information, information can be transmitted to the viewer more effectively.

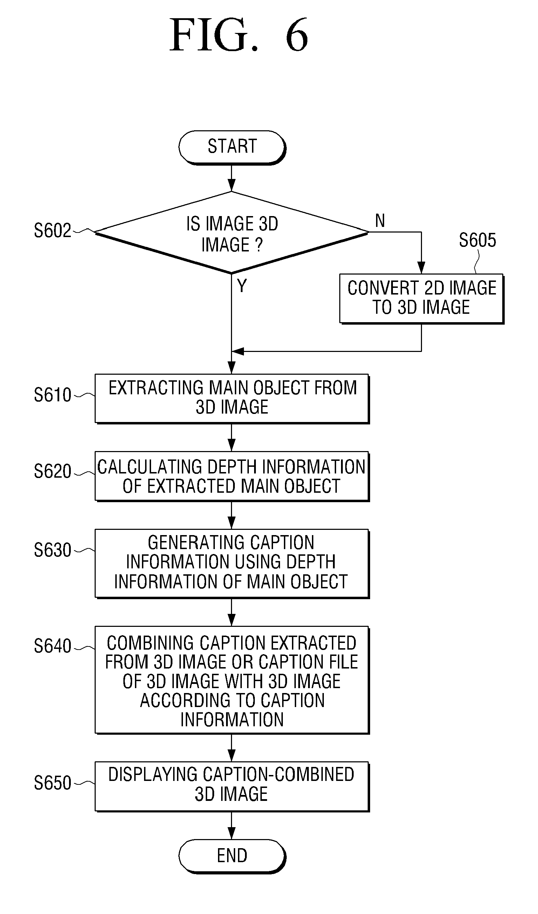

FIG. 6 is a flowchart illustrating a displaying method in accordance with an exemplary embodiment.

A main object area where a main object is located is estimated from a 3D image and the estimated main object area is extracted (S610).

In accordance with an exemplary embodiment, the displaying method may further include an operation of converting a 2D image into the 3D image (S605), if the 2D image is input (S602), prior to extracting the estimated main object area. More specifically, a left-eye image and a right-eye image are processed with reference to a format of the 3D image and the processed left-eye image and right-eye image are time-divided such that the left-eye image and the right-eye image are displayed alternately.

In the displaying method in accordance with an exemplary embodiment, even if a 2D image is input, the 2D image is converted into the 3D image and a caption is generated according to caption information suitable for the 3D image.

Next, depth information of the estimated main object area is calculated (S620).

The depth information of the estimated main object area is determined by extracting a left-eye image area and a right-eye image area of the 3D image corresponding to the estimated main object area and calculating a difference in depth information between the extracted areas.

Also, the depth information of the estimated main object area may be determined by analyzing brightness of the 3D image.

In accordance with an exemplary embodiment, the displaying method may further include an operation of calculating average depth information of the 3D image.

The average depth information may be calculated using an average difference in a position between the left-eye image and the right-eye image of the 3D image.

Next, caption information is generated using the depth information of the estimated main object area (S630).

The caption information may be generated using the depth information of the estimated main object area and the average depth information of the 3D image.

The caption is combined with the 3D image according to the generated caption information (S640).

In accordance with an exemplary embodiment, the displaying method may further include an operation of extracting a caption from a caption file of the 3D image. In other words, if a caption file exists separately from the 3D image, caption text may be extracted from the caption file of the 3D image.

In accordance with another exemplary embodiment, the displaying method may further include an operation of extracting a caption from the 3D image. In other words, if a caption is included in the 3D image, a caption image may be extracted from the 3D image.

The caption information may include at least one of depth, position, size, and color of the caption to be combined with the 3D image and displayed.

The at least one of the depth, position, size, and color of the caption may have a different value for every frame of the 3D image. This is because the depth, position, size, and color of the caption are determined according to the location and depth information of the estimated main object area and the average depth information of the image.

Also, the color of the caption is changeable according to the color of the estimated main object area. In other words, the color of the caption may be changed as the color of the estimated main object area is changed. The color of the caption may be changed to the same as the color of the estimated main object area or may be changed to a different color from that of the estimated main object area so that the caption is distinguished from the image.

The caption may be located on an upper portion, a lower portion, a lateral surface, or an outside or an inside of the image. Also, the caption may not be fixed at a predetermined position and may be movable around the estimated main object area as the estimated main object area moves.

In other words, the displaying method in accordance with an exemplary embodiment adjusts the depth, position, size, and color of the caption according to the generated caption information and combines a caption corresponding to the left-eye image with the left-eye image and a caption corresponding to the right-eye image with the right-eye image.

The displaying method in accordance with an exemplary embodiment adjusts the depth, position, size, and color of the caption according to the caption information, such as the depth, position, size, and color of the caption, which is calculated based on the depth information of the estimated main object area and the average depth information of the 3D image, and combines the adjusted caption with the 3D image.

Finally, the caption-combined 3D image is displayed (S650). In other words, the displaying method according to an exemplary embodiment outputs the left-eye image and the right-eye image of the caption-combined 3D image alternately and provides them to the viewer.

Accordingly, in displaying 3D contents with a caption, the displaying method changes the depth of the caption dynamically in accordance with the depth information of the estimated main object area, which also changes dynamically, thereby minimizing a conflict between accommodation and vergence and mitigating visual fatigue of the viewer. Also, by changing the caption information such as the depth, size, position, and color of the caption as 3D input information, information can be transmitted to the viewer more effectively.

The foregoing exemplary embodiments are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A displaying method comprising:

   generating caption information using depth information of an estimated main object area of a three-dimensional (3D) image;
   combining a caption with the 3D image according to the generated caption information; and
   displaying the caption-combined 3D image.

2. The displaying method as claimed in claim 1, wherein the caption information includes at least one of depth, position, size, and color of the caption.

3. The displaying method as claimed in claim 1 or 2, wherein a color of the caption is changed as color of the estimated main object area is changed.

4. The displaying method as claimed in anyone of claims 1 to 3, further comprising:

   estimating a main object area where a main object is located from the 3D image and extracting the estimated main object area; and
   calculating the depth information of the estimated main object area.

5. The displaying method as claimed in anyone of claims 1 to 4, wherein the depth information of the estimated main object area is determined by extracting a left-eye image area and a right-eye image area of the 3D image corresponding to the estimated main object area, and calculating a difference in depth information between the left-eye image area and the right-eye image area.

6. The displaying method as claimed in anyone of claims 1 to 5, wherein the depth information of the estimated main object area is determined by analyzing brightness of the 3D image.

7. The displaying method as claimed in anyone of claims 1 to 6, further comprising calculating average depth information of the 3D image,
wherein the generating the caption information comprises generating the caption information using the depth information of the estimated main object area and the calculated average depth information.

8. The displaying method as claimed in anyone of claims 1 to 7, further comprising extracting the caption from a caption file of the 3D image.

9. The displaying method as claimed in anyone of claims 1 to 8, further comprising extracting the caption from the 3D image.

10. A display apparatus comprising:

a caption information generator that generates caption information using depth information of an estimated main object area of a three-dimensional (3D) image;
a caption combiner that combines a caption with the 3D image according to the generated caption information; and
an image output unit that displays the caption-combined 3D image.

11. The display apparatus as claimed in claim 10, wherein the caption information includes at least one of depth, position, size, and color of the caption.

12. The display apparatus as claimed in claim 10 or 11, wherein the color of a caption is changed according to color of the estimated main object area.

13. The display apparatus as claimed in anyone of claims 1 to 12, further comprising:

a main object extractor that estimates a main object area where a main object is located from the 3D image, and extracts the estimated main object area; and
a main object depth information calculator that calculates depth information of the extracted main object area.

14. The display apparatus as claimed in claim 13, wherein the main object depth information calculator determines the depth information of the estimated main object area by extracting a left-eye image area and a right-eye image area of the 3D image corresponding to the estimated main object area, and calculating a difference in depth information between the extracted areas.

15. The display apparatus as claimed in claim 13 or 14, further comprising an average depth information calculator that calculates average depth information of the 3D image,
wherein the caption information generator generates the caption information using the depth information of the estimated main object area and the calculated average depth information.

# FIG. 1

# FIG. 2

# FIG. 3

300

CAPTION FILE ──→ 350 CAPTION TEXT EXTRACTOR

2D/3D IMAGE ──→ 310 3D IMAGE CONVERTER ──→ 320 MAIN OBJECT EXTRACTOR ──→ 330 MAIN OBJECT DEPTH INFORMATION CALCULATOR ──→ 360 CAPTION INFORMATION GENERATOR ──→ 370 CAPTION COMBINER ──→ 380 IMAGE OUTPUT UNIT

340 AVERAGE DEPTH INFORMATION CALCULATOR

# FIG. 4

400

450
CAPTION
IMAGE
EXTRACTOR

410
3D IMAGE
CONVERTER

420
MAIN
OBJECT
EXTRACTOR

430
MAIN
OBJECT DEPTH
INFORMATION
CALCULATOR

460
CAPTION
INFORMATION
GENERATOR

470
CAPTION
COMBINER

480
IMAGE
OUTPUT
UNIT

2D/3D
IMAGE

440
AVERAGE DEPTH
INFORMATION
CALCULATOR

# FIG. 5

<Depth ($d_m$) of Main Object> ⎯501

<Position (x,y), Size (s), and Depth (d) of Caption> ⎯505

<Average Depth ($d_a$) of Image> ⎯503

# FIG. 6

START

S602 — IS IMAGE 3D IMAGE ? — N

S605 — CONVERT 2D IMAGE TO 3D IMAGE

Y

S610 — EXTRACTING MAIN OBJECT FROM 3D IMAGE

S620 — CALCULATING DEPTH INFORMATION OF EXTRACTED MAIN OBJECT

S630 — GENERATING CAPTION INFORMATION USING DEPTH INFORMATION OF MAIN OBJECT

S640 — COMBINING CAPTION EXTRACTED FROM 3D IMAGE OR CAPTION FILE OF 3D IMAGE WITH 3D IMAGE ACCORDING TO CAPTION INFORMATION

S650 — DISPLAYING CAPTION-COMBINED 3D IMAGE

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020100064932